# EUROPÄISCHE PATENTSCHRIFT

(11) **EP 0 612 672 B1**
(45) Veröffentlichungstag und Bekanntmachung des Hinweises auf die Patenterteilung: **26.08.1998**
(21) Anmeldenummer: 94102203.0
(22) Anmeldetag: 12.02.1994
(51) Int. Cl.: B65D 77/20, C08J 5/18, C08K 5/00, C08L 53/02

(54) **Formmasse zur Herstellung von Dehnfolien**
Moulding matter for manufacture of stretch films
Matière à mouler pour la fabrication des feuilles étirables

(30) Priorität: 26.02.1993 DE 4305980
(43) Veröffentlichungstag der Anmeldung: 31.08.1994
(73) Patentinhaber: BASF Aktiengesellschaft, 67063 Ludwigshafen (DE)
(72) Erfinder: Bender, Dietmar, Dr., D-67459 Boehl-Iggelheim (DE); Walter, Hans-Michael, Dr., D-67251 Freinsheim (DE); Gausepohl, Hermann, Dr., D-67112 Mutterstadt (DE); Knoll, Konrad, Dr., D-68161 Mannheim (DE); Jung, Andreas, Dr., D-68161 Mannheim (DE); Benedix, Franz, D-67166 Otterstadt (DE); Naegele, Paul, D-67166 Otterstadt (DE); Stember, Helmuth, D-67269 Gruenstadt (DE)

(56) Entgegenhaltungen:
- EP-A- 0 557 573
- DE-A- 4 009 065
- US-A- 3 779 965
- DATABASE WPI Week 7915, Derwent Publications Ltd., London, GB; AN 79-28889B & JP-A-54 030 246 (SUMITOMO)

## Beschreibung

Formmassen auf der Grundlage nichtelastomerer linearer und sternförmig verzweigter Blockcopolymerisate des Styrols mit Butadien sind z.B. aus DE 19 59 922, 25 50 226, 25 20 227, 26 10 068 und 37 38 748 bekannt. Formmassen dieser Art werden für Spritzgußartikel von hoher Steifigkeit und Zähigkeit sowie für steifzähe Folien z.B. für das Thermoformen von Menüschalen und Verpackungsartikeln verwendet. Üblicherweise werden für solche Anwendungen lineare und verzweigte Blockcopolymere mit einem mittleren Molekulargewicht von 100.000 bis 1.000.000 g/mol eingesetzt (vgl. US 4 086 298). Nichtelastomere Folien aus Styrol-Butadien-Blockcopolymerisaten werden auch in der DE-A-40 09 065 (für das Thermoformen) und der US-A-3 779 965 beschrieben. Weiterhin werden in der EP-A-0 557 573 Styrol-Butadien-Blockcopolymerisate beschrieben, die sich als Schmelzkleber eignen sollen.

Aus der JA-A-54 030 246 (referiert in Database WPI, Week 7915, AN 79-28889B) sind möglicherweise elastomere, transparente Formmassen zur Herstellung von Verpackungsfilmen bekannt, die u.a. aus Styrol-Butadien-Blockcopolymeren aufgebaut sind mit einer Bruttozusammensetzung von 40 bis 90 Gew.-% Butadien und 10 bis 60 Gew.-% Styrol. Es werden insbesondere Blockcopolymere mit einer Blockstruktur A₁-B₁-C-B₂-A₂ beschrieben (wobei Aₙ jeweils einen Polystyrol-Block, Bₙ einen Block eines statistisch aufgebauten Styrol-Butadien-copolymerisats und C einen reines Polybutadien bedeutet). Diese Formmassen weisen einen sehr hohen Butadienanteil auf mit dem bekannten Nachteil geringer Wärme- und Sauerstoffbeständigkeit.

Niedermolekulare Blockcopolymere von Styrol und Butadien, d.h. solche mit einer Molmasse zwischen z.B. 50.000 und 100.000 g/mol erscheinen bisher aufgrund mangelnder Schmelzstabilität und schlechter mechanischer Eigenschaften (niedriges E-Modul, reduzierte Reißdehnung) für Folien und technische Anwendungen ungeeignet.

Aufgabe der Erfindung ist die Schaffung einer Formmasse für elastomere Folien, die zur Verpackung von frischem Obst, Gemüse und Fleisch verwendbar sind; solche elastomere Folien werden als Dehnfolien (Cling films) bezeichnet und müssen ein komplexes Eigenschaftsprofil aufweisen:
- Dehnbarkeit (Reißdehnung > 300 %)
- Rückstellverhalten (Memory-Effekt)
- Dart Drop > 500 g
- Antistatisches Verhalten
- Transparenz
- Siegelbarkeit
- Cling (Klebrigkeit)
- Sauerstoffdurchlässigkeit
- Wasserdampfdurchlässigkeit
- gute Verarbeitbarkeit auf dem Extruder
- niedriger Stippenpegel

Bisher erfüllten lediglich mit 25 bis 35 % Weichmacher ausgerüstete PVC-Folien die geforderten Eigenschaften. Diese Folien werden jedoch aus ökologischen Gründen zunehmend abgelehnt, so daß intensiv nach Alternativ-Materialien gesucht wird.

Die Erfindung sieht die Verwendung von Blockcopolymeren aus Styrol und Butadien oder deren technischen Äquivalenten mit einer mittleren Molmasse (MD) von 50.000 bis 100.000 g/mol als Grundstoff für solche Dehnfolien vor, wie sie vorstehend beschrieben sind.

Unmittelbarer Erfindungsgegenstand ist eine kautschukelastische Formmasse für die Herstellung von Dehnfolien, insbesondere für Verpackungszwecke, die im wesentlichen aus einem linearen oder verzweigten Blockcopolymerisat aus Blöcken von Polystyrol und Polybutadien mit scharfen oder verschmierten Blockübergängen aus 30 bis 45 Gew.-% Butadien und 55 bis 70 Gew.-% eines Styrols besteht und ferner bis 10 Gew.-% eines Mineralöls, 0,1 bis 1 Gew.-% eines Wachses, 0,1 bis 1 Gew.-% eines verwendungsgemäß akzeptablen Stabilisators und bis 1 Gew.-% weitere Hilfsstoffe enthält.

Um das typische Eigenschaftsbild einer Dehnfolie für Obst- und Fleischverpackungen zu erreichen, sollte insbesondere folgendes beachtet werden:

### Das Blockcopolymer

Bei den erfindungsgemäß bevorzugten Blockcopolymeren handelt es sich um Blockcopolymere mit scharf getrennten Einzelblöcken, die durch sukzessive anionische Polymerisation hergestellt werden, um Blockcopolymere, die durch Kuppeln von Blockcopolymeren mit lebenden Kettenenden durch polyfunktionelle Reagentien hergestellt werden, sowie um Blockcopolymeren mit verschmierten Übergängen zwischen den Einzelblöcken (tapered block copolymers).

Die linearen Blockcopolymeren besitzen i.a. mindestens drei Blöcke, wovon die äußeren Blöcke bei 3-Blockcopolymeren durch Styroleinheiten gebildet werden. Bei Blockcopolymeren mit mehr als drei Blöcken können einer oder beide Außenblöcke auch durch Polybutadiensequenzen gebildet werden. Sternförmig verzweigte Polymerisate weisen die allgemeine Formel [A]ₖ-X auf, wobei X das Kupplungszentrum und [A]ₖ ein k-ästiges Blockcopolymerisat mit mindestens zwei Blöcken je Ast A bedeutet. Die Übergänge können dabei scharf oder verschmiert sein, wobei verschmierte Blockübergänge aufgrund der höheren Zähigkeit des Polymerisats von Vorteil sind. Bevorzugt im Sinne der Erfindung sind sternförmige Blockcopolymere mit S₁-B-S₂-Struktur in den Sternästen und leicht verschmierten Übergängen zwischen dem Butadienblock B und dem Styrolblock S.

Ein besonders geeignetes, mittels anionischer Polymerisation herstellbares Blockcopolymer, das lineare oder sternförmige Struktur aufweisen kann, ist durch einen Polybutadiengehalt von etwa 30 bis 50 % gekennzeichnet. Ein Polybutadien-Gehalt unter 30 % führt oft zu Produkten, die keine ausreichende Zähigkeit oder Dehnbarkeit (Reißdehnung < 300 %) besitzen. Ein Gehalt von über 50, in manchen Fällen schon über 45 % Polybutadien führt zu Materialien, die thermisch so empfindlich sind, daß die Extrusion nicht mehr stippenarm gelingt.

Um die Empfindlichkeit gegenüber Vernetzungsreaktionen (also Gelbildung, äußerlich erkennbar am Auftreten von Stippen) zu vermindern, werden für die erfindungsgemäßen Dehnfolien Blockcopolymere mit einer hohen Schmelz-Volumen-Rate (Melt Volume Rate; MVR), d.h. eines niedrigen Molgewichts verwendet.

Üblicherweise liegt die Schmelz-Volumen-Rate bei 200°C und 5 kg Belastung (MVR_{200/5}) zwischen 10 und 70 [ml/10 min]. Die MVR wird über das Molekulargewicht des Blockcopolymeren eingestellt. Bei geeigneten linearen Blockcopolymeren liegt das Zahlenmittel des Molekulargewichts (Mₙ) bevorzugt zwischen 70.000 bis 90.000 g/mol, bei sternförmig verzweigten zwischen 60.000 bis 90.000 g/mol. Bevorzugt werden die aus DE 25 50 226 bekannten Blockcopolymeren eingesetzt. Polymere mit einer MVR über 70 [ml/10 min] haben weniger gute mechanische Eigenschaften (E-Modul, Reißdehnung) und sind für die Herstellung von Dehnfolien weniger geeignet.

Meßtechnisch läßt sich der Vorgang der Vernetzung von Styrol-Butadien-Blockcopolymeren auf dem Wege der Strangextrusion bei konstanter Temperatur durch den Anstieg des Extrusionsdrucks über die Zeit darstellen (Figur). Der Druckanstieg ist ein klares Indiz für Vernetzungsreaktionen. Ein während mindestens einer Stunde nahezu konstanter Extrusionsdruck kennzeichnet für die Herstellung hochwertiger Folien erfindungsgemäß besonders geeignete Copolymerisate. Auf jeden Fall soll MVR nach einstündiger Belastung innerhalb des erfindungsgemäßen Bereichs, d.h. oberhalb von 10 ml/10 min bleiben.

### Stabilisierung der Blockcopolymeren

Das erfindungsgemäß für Dehnfolien eingesetzte Blockcopolymer kann mit z.B. 0,1 bis 0,5 % 2-Propensäure-2-(1,1-dimethylethyl)-6-[[3-(1,1-dimethylethyl)-2-hydroxy-5-methylphenyl]methyl]-4-methylphenylester (im Handel erhältlich z.B. als ®Irganox 3052 der Ciba-Geigy AG) oder einem anderen verwendungsgemäß akzeptablen und gegebenenfalls weiteren Stabilisatoren, wie z.B. Trisnonylphenylphosphit (TNPP) oder einer phenolischen Verbindung in einer Menge bis zu 1 % stabilisiert werden. Die Auswahl eines geeigneten Stabilisators richtet sich vor allem auch nach lebensmittelrechtlichen Vorschriften und soll die Erfindung nicht begrenzen.

### Einstellung des Rückstellverhaltens (Memory-Effekt)

Durch den Zusatz von bis zu 10 % (vorzugsweise 1 bis 5 %) Mineralöl wird die Verarbeitbarkeit der Formmasse deutlich verbessert. Scherbelastungen bei der Extrusion werden reduziert, die Rückstellung nach Deformation in die ursprüngliche Form (Memory-Effekt) beschleunigt. Optimiert wird das Rückstellverhalten durch biaxiales Recken der Folie z.B. nach dem Double-Bubble-Verfahren oder in Reck-Anlagen für Breitschlitzfolien. Um Relaxationseffekte zu minimieren, welche die Rückstellung nach Deformation verlangsamen, wird bei möglichst tiefen Temperaturen, bevorzugt bei 30 bis 80°C gereckt.

### Cling-Effekt (Klebrigkeit)

Von Dehnfolien wird eine gewisse Klebrigkeit verlangt, die z.B. dazu ausreicht, die Folie an Keramik und Stahl haften zu lassen. Diese Forderung steht im Widerspruch zur Vermeidung des sogenannten Folienblockens, dem Verkleben der Folienwickel. Durch die Verwendung von 0,1 bis 1 % eines natürlichen oder künstlichen Wachses, z.B. eines polyolefinischen (aliphatischen) Wachses, das sich strukturell von Polyethylen und dessen Copolymeren mit Propylen ableitet sowie gegebenenfalls bis 1 % Fettsäure, Fettsäureamid und/oder bis 0,5 % einer Metallseife kann das Blocken reduziert und der Cling-Effekt optimiert werden. Anstelle von Fettsäuren und deren Amiden können auch Fettsäureester, -diamide, Wachssäuren sowie deren Ester benutzt werden.

### Permeation

Sauerstoff, Kohlendioxid und Wasserdampfdurchlässigkeit hängen vom Polybutadiengehalt ab. Allgemein gilt: je höher der Polybutadiengehalt, um so höher ist die Durchlässigkeit. Angestrebt wird eine 24-Stunden-Durchlässigkeit (bezogen auf die Folienstärke 100 µm) von > 15.000 cm³/m²·Tag·bar für Sauerstoff und 100.000 cm³/m²·Tag·bar für CO₂ (vgl. Tabelle 2).

### Siegelung

Gegenüber konventionellen PVC-Folien haben die erfindungsgemäßen Dehnfolien den Vorteil, daß sie bei Temperaturen zwischen 60 bis 90°C gesiegelt werden können, während PVC-Dehnfolien üblicherweise 100 bis 120°C benötigen. Höhere Taktzeiten bei den Verpackungsmaschinen sind folglich möglich.

### Eigenschaftsprüfungen

### Beispiel 1 bis 3

Es wurden folgende erfindungsgemäße Materialien (Polymer 1, 2 und 3) untersucht (die Mengenangaben beziehen sich, ebenso wie im vorstehenden Text, auf das Gewicht):

| | | | |
|---|---|---|---|
| Polymer 1: | Zweiblockcopolymer | aus | 40 % Polybutadien |
| | | und | 60 % Polystyrol |
| | MVR_{200/5}: | | 25 ml/min |
| | Additive | | 0,35 % ®Irganox 3052 |
| | | | 0,85 % TNPP |
| | | | 0,3 % ®Be-Square 195 white |
| | | | (natürliches Hartwachs) |
| Polymer 2: | Blockcopolymer | aus | 38 % Polybutadien |
| | | und | 62 % Polystyrol |
| | MVR_{200/5}: | | 32 ml/min |
| | Additive | | 0,35 % ®Irganox 3052 |
| | | | 0,85 % TNPP |
| | | | 4 % Weißöl ®Minog DAB40 |
| | | | 0,1 % Stearinsäureamid |
| | | | 0,1 % Ca-Stearat |
| | | | 0,3 % ®Be-Square 195 white |
| Polymer 3: | Blockcopolymer | aus | 38 % Polybutadien |
| | | und | 62 % Polystyrol |
| | MVR_{200/5}: | | 40 ml/min |
| | Additive | | 0,35 % ®Irganox 3052 |
| | | | 0,85 % TNPP |
| | | | 4 % Weißöl ®Minog DAB40 |
| | | | 0,1 % Stearinsäureamid |
| | | | 0,3 % ®Be-Square 195 white |

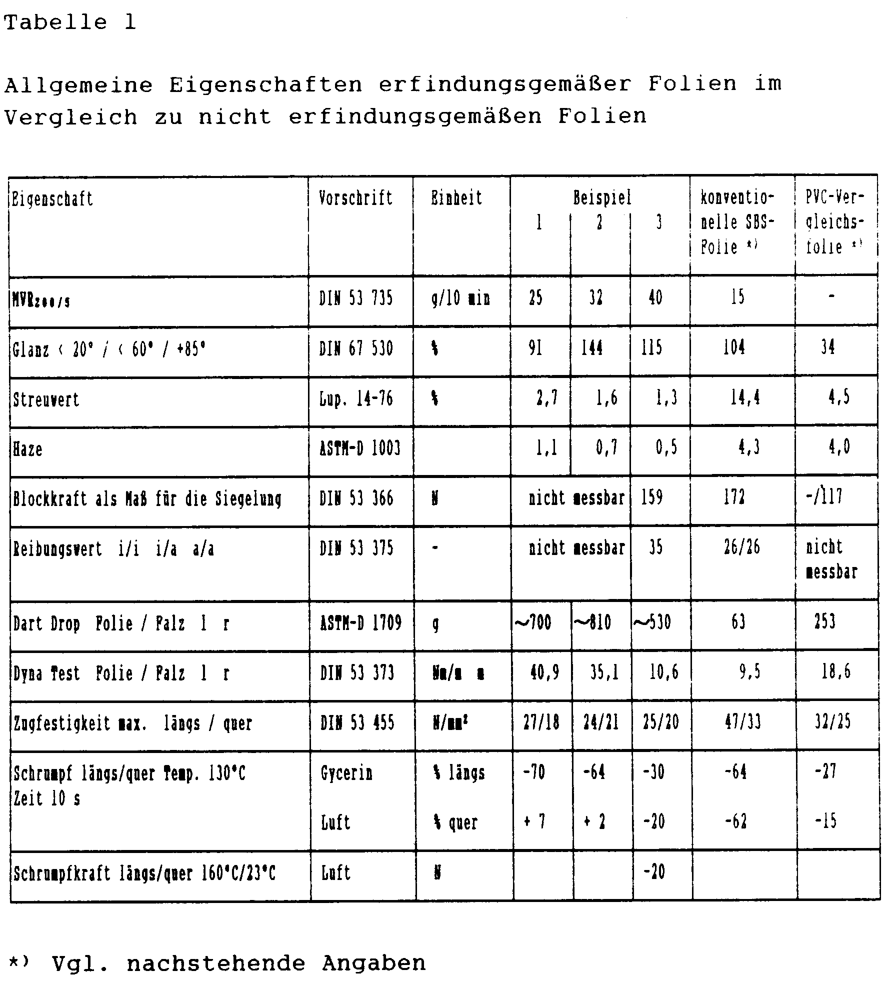

In der nachstehenden Tabelle 2 sind Durchlässigkeit und Permeabilität eines nicht erfindungsgemäßen hochmolekularen SB-Blockpolymeren, einer bekannten Dehnfolie auf der Grundlage von PVC und den drei erfindungsgemäßen Folien (Beispiele 1 bis 3) bei 23°C gegenüber trockenem Sauerstoff und Kohlendioxid einander gegenübergestellt; im einzelnen wurden verwendet:
- Beispiel 1
- Beispiel 2
- Beispiel 3
- Styrol-Butadien-Blockcopolymer mit 23 % Polybutadien (Handelsprodukt ®Styrolux KR 2688 der BASF Aktiengesellschaft)
- PVC-Vergleichsfolie (®Permapack, Rorschach, Schweiz)

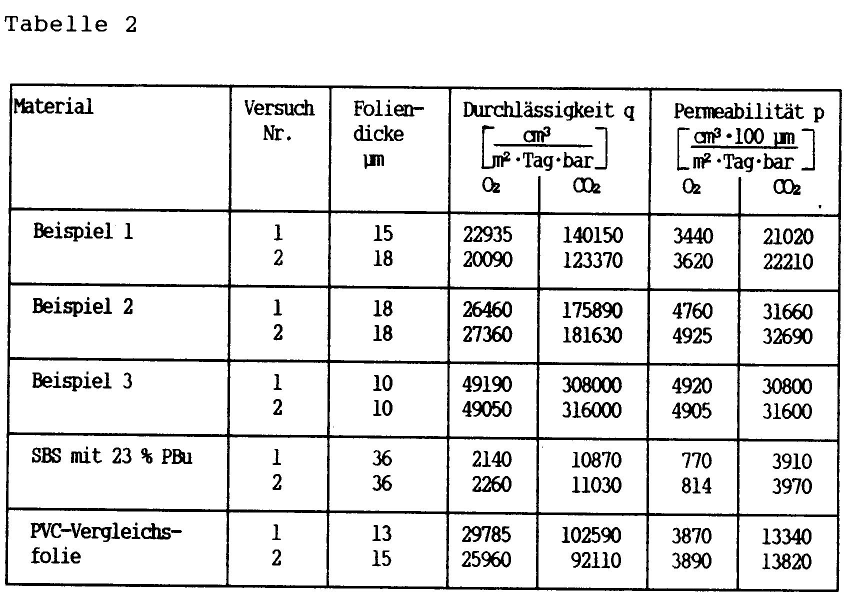

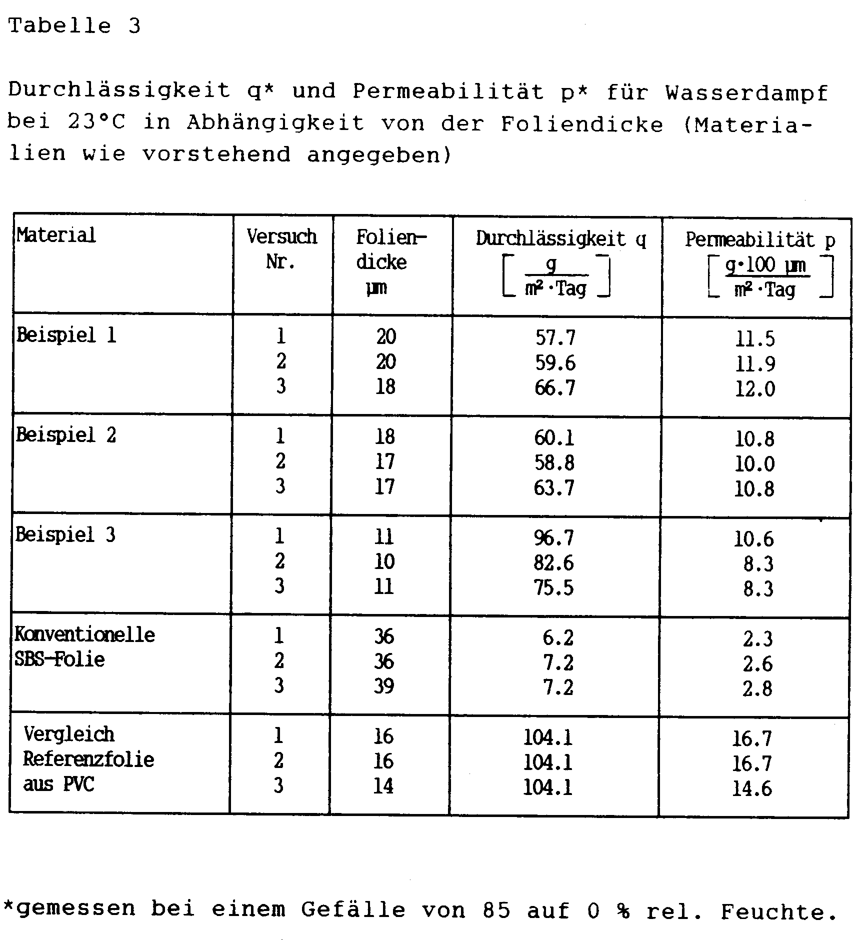

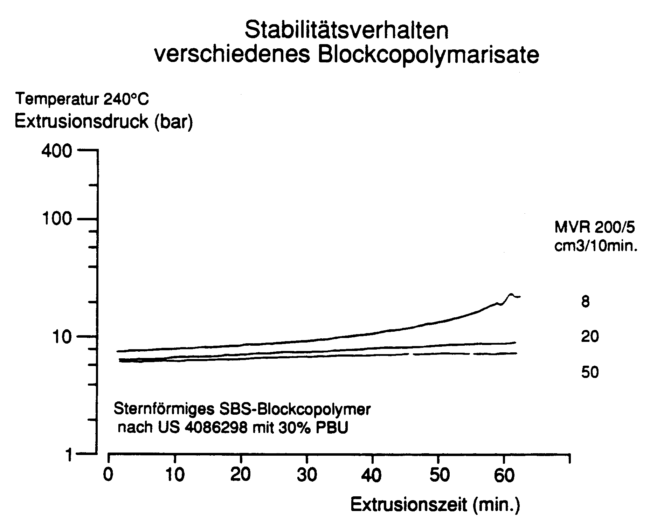

## Patentansprüche

1. Kautschukelastische Formmasse für die Herstellung von Dehnfolien, insbesondere für Verpackungszwecke, bestehend im wesentlichen aus einem linearen oder verzweigten Blockcopolymerisat aus Blöcken von Polystyrol und Polybutadien mit scharfen oder verschmierten Blockübergängen aus 30 bis 45 Gew.-% Butadien und 55 bis 70 Gew.-% eines Styrols, bis 10 Gew.-% eines Mineralöls, 0,1 bis 1 Gew.-% eines Wachses, 0,1 bis 1 Gew.-% eines verwendungsgemäß akzeptablen Stabilisators und bis 1 Gew.-% weiteren Hilfsstoffen.

2. Formmasse nach Anspruch 1, dadurch gekennzeichnet, daß die Schmelz-Volumenrate (200°C/5 kg) des Styrol-Butadien-Blockcopolymeren im Bereich von 10 bis [70 ml/10 min] bzw. das mittlere Molekulargewicht (M_{N}) zwischen 50.000 und 100.000 g/mol liegt.

3. Formmasse nach Anspruch 1, enthaltend als Stabilisator 2-Propensäure-2-(1,1-dimethylethyl)-6-[[3-(1,1-di-methylethyl)-2-hydroxy-5-methylphenyl]-methyl]-4-methylphenylester

4. Verwendung der Formmasse nach einem der Ansprüche 1, 2 oder 3 zur Herstellung von Dehnfolien.

5. Dehnfolie bestehend im wesentlichen aus der Formmasse nach einem der Ansprüche 1, 2 oder 3.

## Claims

1. An elastomeric molding material for the production of cling films, in particular for packaging purposes, consisting essentially of a linear or branched block copolymer composed of blocks of polystyrene and polybutadiene having well defined or tapered block transitions and comprising from 30 to 45% by weight of butadiene and from 55 to 70% by weight of a styrene, up to 10% by weight of a mineral oil, from 0.1 to 1% by weight of a wax, from 0.1 to 1% by weight of a suitable stabilizer and up to 1% by weight of further assistants.

2. A molding material as claimed in claim 1, wherein the melt volume rate (200°C/5 kg) of the styrene/butadiene block copolymer is from 10 to [70 ml/10 min] or the average molecular weight (Mn) is from 50,000 to 100,000 g/mol.

3. A molding material as claimed in claim 1, containing 2-(1,1-dimethylethyl)-6-[[3-(1,1-dimethylethyl)-2-hydroxy-5-methylphenyl]-methyl]-4-methylphenyl 2-propenoate as a stabilizer.

4. The use of a molding material as claimed in any of claims 1, 2 or 3 for the production of cling films.

5. A cling film consisting essentially of the molding material as claimed in any of claims 1, 2 or 3.

## Revendications

1. Masse à mouler possédant une élasticité rappelant celle du caoutchouc, pour la fabrication de feuilles extensibles, en particulier pour des objets d'emballage, constituée essentiellement d'un copolymère séquencé linéaire ou ramifié constitué par des séquences de polystyrène et de polybutadiène comprenant des transitions de séquences nettes ou floues, constituées par du butadiène à concurrence de 30 à 45% en poids et par un styrène à concurrence de 55 à 70% en poids, par une huile minérale jusqu'à concurrence de 10% en poids, par une cire à concurrence de 0,1 à 1% en poids, par un stabilisateur acceptable en fonction de l'utilisation à concurrence de 0,1 à 1% en poids et par des adjuvants supplémentaires jusqu'à concurrence de 1% en poids.

2. Masse à mouler selon la revendication 1, caractérisée en ce que le débit volumique de la masse en fusion (200°C/5 kg) du copolymère séquencé de styrène-butadiène se situe dans le domaine de 10 à 70 [ml/10 min], respectivement, le poids moléculaire moyen (M_{N}) se situe entre 50.000 et 100.000 g/mole.

3. Masse à mouler selon la revendication 1, contenant, à titre de stabilisateur, l'ester 2-(1,1-diméthyléthyl)-6-[[3-(1,1-diméthyléthyl)-2-hydroxy-5-méthylphényl]-méthyl]-4-méthylphénylique de l'acide 2-propénoïque.

4. Utilisation de la masse à mouler selon l'une quelconque des revendications 1, 2 ou 3 pour la fabrication de feuilles extensibles.

5. Feuille extensible constituée essentiellement de la masse à mouler selon l'une quelconque des revendications 1, 2 ou 3.
